# EUROPEAN PATENT APPLICATION

(11) **EP 1 085 756 A2**
(43) Date of publication of application: **21.03.2001**
(21) Application number: 00120303.3
(22) Date of filing: 15.09.2000
(51) Int. Cl.: H04N 7/16

(54) **Description framework for audiovisual content**

(30) Priority: 16.09.1999 US 154389 P; 15.03.2000 US 525850
(71) Applicant: Sharp Kabushiki Kaisha, Osaka-shi Osaka (JP)
(72) Inventor: van Beek, Peter, Rochester, NY 14620 (US); Sezan, Ibrahim, Vancouver, WA 98683 (US); Tomioka, Yoshiaki, Funabashi-shi, Chiba 274-0801 (JP)
(74) Representative: MÜLLER & HOFFMANN Patentanwälte

(57) **Abstract**

A system and method for providing a description framework for an audiovisual presentation system. The system includes an interface that allows the user to consume several different representations of audiovisual content. The system also includes a descriptive structure that identifies and locates the summary selected by the user. The user is presented with a multi-view menu of the available types of summaries and selects a summary type, and the system provides summaries of that type to the user. The summary description service is provided to the user (60) based upon user preferences and history. When audiovisual material is then transmitted to the user (60), the description service provides the user (60) with the summary description that allows the user (60) to make and consume summaries of the material.

## Description

### BACKGROUND OF THE INVENTION

This application is a continuation of US Provisional Application No. 60/154,389, filed 9/16/99 and claims priority thereto.

### 1. Field of the Invention

This invention relates to descriptions of audio-visual material. More particularly, this invention relates to a method for specifying descriptions that allow users to navigate amongst different audiovisual material, and browse and experience the content of a particular audiovisual program, quickly and effectively.

### 2. Background of the Invention

Digital audiovisual material is becoming increasingly available to users through digital TV broadcast, digital video cameras, DVD, and PC-based access to multimedia on the Internet. In addition, persistent large-volume storage and storage that allows non-linear access to audiovisual content, such as hard disk storage in powerful PC platforms and personal video recorders (PVR), is becoming available in consumer devices. Consequently, there is a need for rapid navigation and browsing capabilities to enable users to efficiently discover and consume the contents of audiovisual material or programs.

Users would also benefit from having non-linear access to different views of a particular program, a feature not currently available. The views could be adaptive to user's personal preferences, interests or usage conditions, such as the amount of time the user wants to spend in consuming the content, or the resources available to the user's terminal. Such adaptability would enhance the entertainment and educational value of audiovisual information.

This proliferation of audio-visual material available to users has the potential to overwhelm the viewer and lead to frustration at the inability to browse and view content in an efficient manner. Viewing summaries of the content allows the viewer/user to skip irrelevant content arid locate the desired content quickly and easily. Further, multiple different summaries, it available, could provide the user with alternative views of a particular program that the user could choose from depending on personal preferences or usage conditions.

This capability is appearing more frequently in newer technologies, such as the digital video disk (DVD). DVD movies provide 'scene selections' or 'chapter selections' that have a visual array of thumbnails and textual titles associated with each scene. This allows the user to click on the thumbnail of the desired scene, jump to that scene and begin playback. Playback typically continues until the end of the movie, unless the viewer makes another selection.

However, this technology remains limited, providing only the capability to index for the purpose of jumping to an arbitrary position and continuing playback from that position. Additionally, these are only currently available for movies and cannot be provided for other types of audio-visual content, such as home movies, or recordings of real-time broadcast of television. This capability can be seen as a visual index, a simple form of a summary description.

A system in which such summaries and descriptions can be used is discussed in co-pending US Patent Application No. 09/299,811, filed 4/26/99, and owned by the assignee of this application and incorporated by reference herein. The system discussed functions in a typical audiovisual system including several devices such as a television, cable or satellite reception, a sound system, etc. The term system refers to both individual devices and systems of several of these devices.

However, the reference does not provide certain aspects of implementation of such a system, including models for usage and provision of content and services.

### SUMMARY OF THE INVENTION

One aspect of the invention is a system that provides a descriptive framework about programs presented by an audiovisual system. The framework includes an interface allowing a user to view representations of audiovisual material and a descriptive structure that identifies and locates each of the representations of audiovisual material and data associated with the representation. Examples of such representations could be a multimedia title description and summary descriptions.

Another aspect of the invention is a method for providing alternative summaries to the user having the steps of presenting a multi-view menu of the available types of summaries to the user. The summaries can be hierarchical or non-hierarchical. A user selection of a summary type is received and the selected summaries are provided.

Yet another aspect of the invention is a method of providing summary description services of audiovisual content to a user. Information is received from the user including specifications of platform resources at the user end and user preferences. Usage history of the user is tracked and used in conjunction with the specifications and preferences to transmit audiovisual material to the user with associated summary descriptions. The summary descriptions can be provided in such a way that the user can send the summary descriptions to other users.

### BRIEF DESCRIPTION OF THE DRAWINGS

For a more complete understanding of the present invention and for further advantages thereof, reference is now made to the following Detailed Description taken in conjunction with the accompanying Drawings in which:
Figure 1 shows a block diagram representation of an audiovisual presentation system in accordance with the invention.
Figure 2 shows a method for selection of an audiovisual program within a description framework in accordance with the invention.
Figure 3 shows a block diagram representation of a summary description scheme in accordance with the invention.
Figure 4 shows a block diagram representation of alternative summaries available within a summary description scheme in accordance with the invention.
Figure 5 shows a block diagram representation of alternative summaries available within a hierarchical summary description scheme in accordance with the invention.
Figure 6 shows a flow chart for one embodiment of provision of audiovisual services in accordance with the invention.

### DETAILED DESCRIPTION OF THE PREFERRED EMBODIMENTS

As mentioned previously, an overall system for creating and managing description schemes for an audiovisual presentation system is disclosed in co-pending US Patent Application No. 09/299,811, filed 4/26/99.

In this system, the video, image and/or audio information, which will be referred to as presentation information is made available to a user and/or a system. The information is presented to the user from the system such as a television or radio. The user or user's agent interacts with the system to receive the information in a desirable manner and to define preferences as to what type of information is obtained. The term user will refer to the end recipient of the information, which could be a person, a machine or a software program running on a machine, as examples.

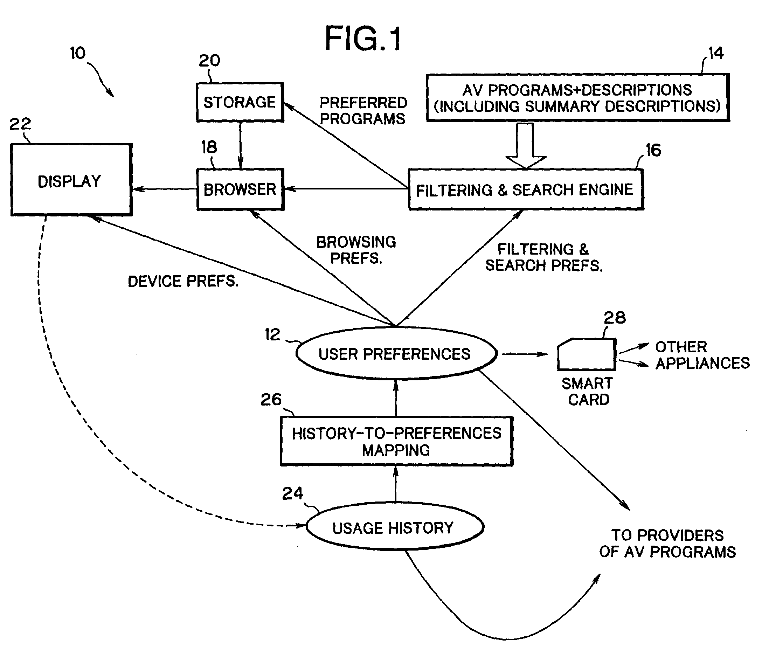

To define these interactions, a set of description schemes containing data describing each component is defined, with reference to an overall audiovisual presentation system 10 as shown in Figure 1. The user preferences 12 are used in several different areas to maximize both the user's enjoyment and the system utility to the user. The preferences describing the topics and subject matter of interest to the user is used in both searching for and filtering the audiovisual programs 14. These two sets of data, the user preferences and program descriptions 14, are correlated in the filtering and search, engine 16 to identify the preferred programs.

The programs identified by the filtering and search engine 16 is then sent to a browsing module 18, along with the user's browsing preferences. Another output from the filtering and search engine 16 are preferred programs that the user has designated for storage. These are stored in storage module 20. The programs selected by the user with the browsing module are then sent to the display 22. The user may utilize multimedia title descriptions of preferred programs to navigate among the programs that the user wants to consume. Once a program is selected, summary description of that particular program is correlated with user's browsing preferences to offer the user preferred alternative summaries.

The display 22 receives the programs and displays them in accordance with the user's device preferences as to the operation of the display. User's device preferences may include, for example, device settings such as volume setting that may vary with the genre of the program that is being watched. The display and user's interaction with the display, such as stopping a program before its end and watching certain types of programs with certain device settings, also provides information in a manner analogous to a feedback loop to update and log the usage history 24. The usage history 24 can be mapped against the preferences by mapping module 26. This information is then used in conjunction with user inputs by the user preference module 12.

These documented user preferences can be useful in several contexts, not just an audiovisual presentation system. The user preferences and usage history conform to a specified format similar to that of the description of the audiovisual program information and can therefore be accumulated in the system as usage history information for further use in selecting the contents desired by the user. Furthermore, the usage history information can be transmitted to the provider of the audiovisual programs 14 to receive a selected audiovisual program or directly receive audiovisual program summaries selected by the user. In the latter case, user preferences are correlated with summary descriptions at the provider side to select and directly deliver summarized audiovisual programs to the user. The preferences and summary descriptions and so on could also be transferred to a 'smart card' 28 or similar, portable storage means and ultimately transferred to another system by the user. However, the details of this type of transfer are beyond the scope of the current invention and are only mentioned for completeness.

In this context, there are several description schemes, which were the subject matter of the previously mentioned co-pending patent application. However, that discussion was at the overall system level, and no framework for the individual descriptions schemes at the user, program or device level were considered. This invention is intended to provide, as a technique of realizing efficient navigation and browsing of audiovisual programs using their summaries, a title description scheme capable of including multimedia information and a summary description scheme for describing hierarchical summaries of an audiovisual program and, furthermore, to construct a system and a service model utilizing description data based on the above description schemes.

As shown in Figure 1, the audiovisual programs 14 include descriptions of the programs in a description framework. The description framework can have several different types of descriptive structures, Of particular interest here are the multimedia title description and the summary description. The framework can contain either one of these types, both of these and either one or both in combination with other types of program descriptions including metadata. For example, metadata on the creation of the program (director, actors, language, etc.), and genre of the program can be provided.

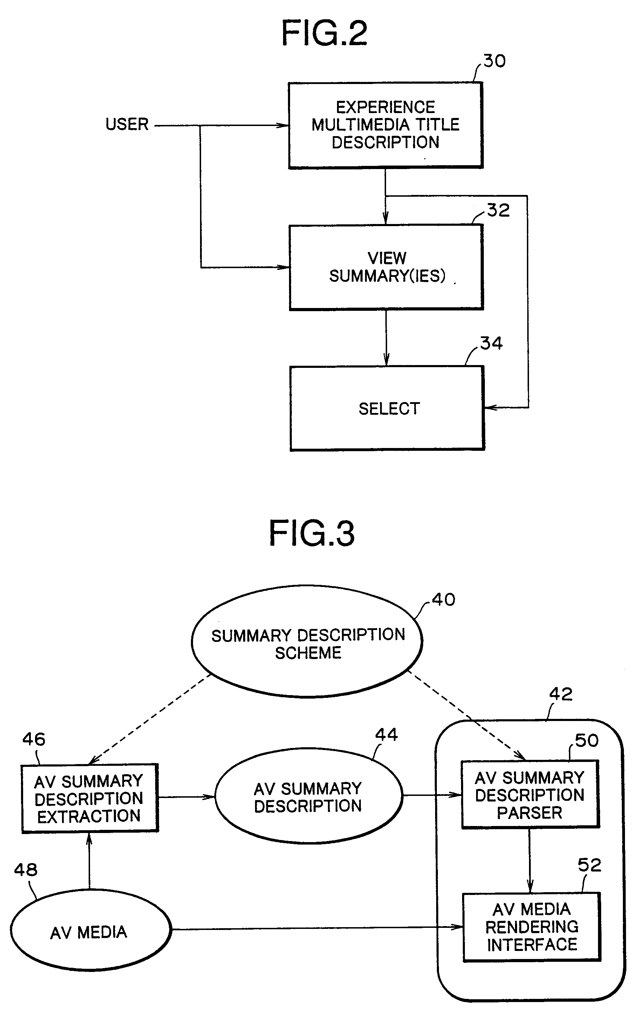

In operation, the user manipulates the descriptive structures to select audiovisual programs presented by the presentation system of Figure 1. This view and select process can occur in several ways, as shown in Figure 2. For ease of discussion and understanding, one could view the description framework like an electronic library. The user could browse and search the programs by their titles, analogous to the multimedia title description, or by a more robust summary, analogous to the summary descriptions. The descriptive structures such as the multimedia title description and the summary descriptions can be in one of several forms, including text, audio clips, video clips, still images, etc.

Summary descriptions enable rapid navigation and browsing in this system. In particular, summary descriptions enable key-frame summaries, event based video summaries that group video segments containing certain events, and video highlight summaries of particular duration. These summary descriptions's schemes contain references to the audiovisual media and its segments, frames, and audio tracks that can be efficiently utilized by a presentation engine in rendering different summaries and views of a program. Hence, when an audiovisual program has multiple versions of its summary description, the system can subsequently generate respective views by means of the presentation engine using each of the summary description versions. Consequently, the system provides an efficient means for using multiple views of a program without the need for pre-storing its multiple versions in a separate storage area, thus realizing saving in an area for storing data at the system side.

The term summary description as used here refers to summaries that conform to a set of rules for such summaries. The syntax, semantics, and rules of for these summary descriptions are contained in summary description schemes. Summary description schemes specify which descriptors and attributes can be used in the description, their allowed range of values and the rules for their combinations. The use of common set of description schemes and descriptors would enable interoperability between different devices (i.e., devices for content providers, devices for content creators, devices for service providers and devices for users) that handle audio-visual content. These different devices would all be able to interpret summaries that use the same description schemes and descriptors. Ideally, the scheme would allow the different devices flexibility in how it presents the contents of the summaries to the viewer.

A particular audiovisual program today is often created rich in media. In particular, it may have a still image, graphic, short video clip, an audio jingle, or a pictorial logo associated with it, which concisely represent its content. Such media can be used along with the usual textual title of a program. For example, a music program may have a pictorial title in addition to its textual title; a TV program may have a logo or an audio jingle. Fig. 3 illustrates an example of a description scheme for integrating the data such as a text, an audio clip, a video clip and a still image into information associated with a title. In the descriptive structure of Fig. 3, a title is described inside 〈Title Text〉...〈/Title Text〉 like a title in conventional text data, while information for locating multimedia data such as an audio clip, a video clip and a stilt image is described inside 〈Title Image〉...〈/Title Image〉. This creates a description scheme enabling collection of the conventional text data and the information for locating multimedia data. The use of the description scheme enables the system to extract, for example, image data from a storage area for storing multimedia such as image, develop and add the data. Namely, the system not only presents text data but also prepares a multimedia title easily. The multimedia title descriptions can facilitate an audiovisual, informative, effective, and entertaining navigation between different audiovisual programs.

In this title description scheme, the multimedia data is represented by information for locating the multimedia data. This enables the system to prepare multimedia data information not only by directly referring to the multimedia data stored in the system but also by specifying a frame number of an AV program stored in the system, specifying the beginning time and the ending time of a video clip and an audio clip or referring to multimedia data being at the side of provider outside the system.

Consequently, the system that does not contain original multimedia information can prepare a multimedia title description by referring the location of the multimedia data in the description data. This eliminates the need for storing the multimedia information at the system side, achieving the saving in data storage area thereof. If the data stored outside the system is necessarily used multiple times, the system can read first and then use the data as the internal data to assure rapid presentation of the data.

Multimedia title description may be integrated into the summary description, or may be a separate description for a particular program, without impacting the functionality of multiple media titles and summaries. Once a user chooses a program of interest as a result of navigation through multimedia titles, the user may utilize the summary description for that program to quickly discover the audiovisual content of the program, browse the program, or non-linearly navigate within the program. The relationship between these descriptive structures will be discussed with reference to Figure 2.

As shown in Figure 2, the user can start by experiencing the multimedia title descriptions at step 30. The user can then select a title and hence an audiovisual program and go to the next level of description of that audiovisual program, which would be the summary description in step 32. The user then makes a selection in step 34 and browses and experiences the program.

Alternatively, the user could skip the summary description in step 32 and make a selection based only on the multimedia title description. Another possibility allows the user to skip viewing the multimedia title descriptors and instead starting the selection process at the summary description level. The starting point for the user may be determined by the amount of time available, any previous knowledge of the programs, and the desired amount of detail. Similarly, it is also possible to adaptively read first only description data such as multimedia title data and summary data into the user system at Step S30 and obtain necessary audiovisual program data trough Step S32.

An example of a multimedia title description is shown below.

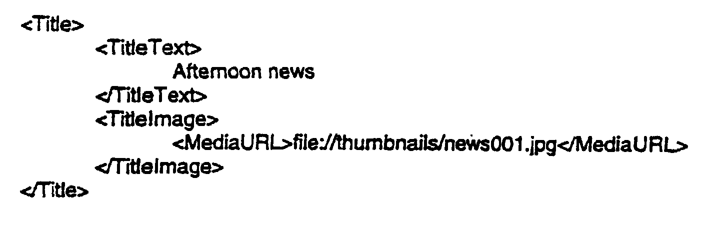

In order to understand the higher amount of detail used in the summary description, it is helpful to discuss it in more thoroughly. As shown in Figure 3, audiovisual summaries are extracted from the audiovisual media 48 by the extraction module 46. Descriptions of these summaries 44 are then authored according to the summary description scheme which specifies the elements, descriptors, attributes and other descriptions that can be included in the description, the ranges of values that they can attain, and their allowable combinations of the elements, description and attributes. The summary description scheme includes a data description scheme for preparing a multimedia title and a description scheme for presenting a summary description of an audiovisual program. The multimedia title description and the summary description of an audiovisual program are prepared according to the above scheme. The displaying device 42, whether a user terminal or audiovisual device, receives the summary description and the audiovisual content. The device 42 includes a parser 50 that interprets and validates the audiovisual summary description 44 in accordance with the description scheme and presents the summaries to the user with the interface52.

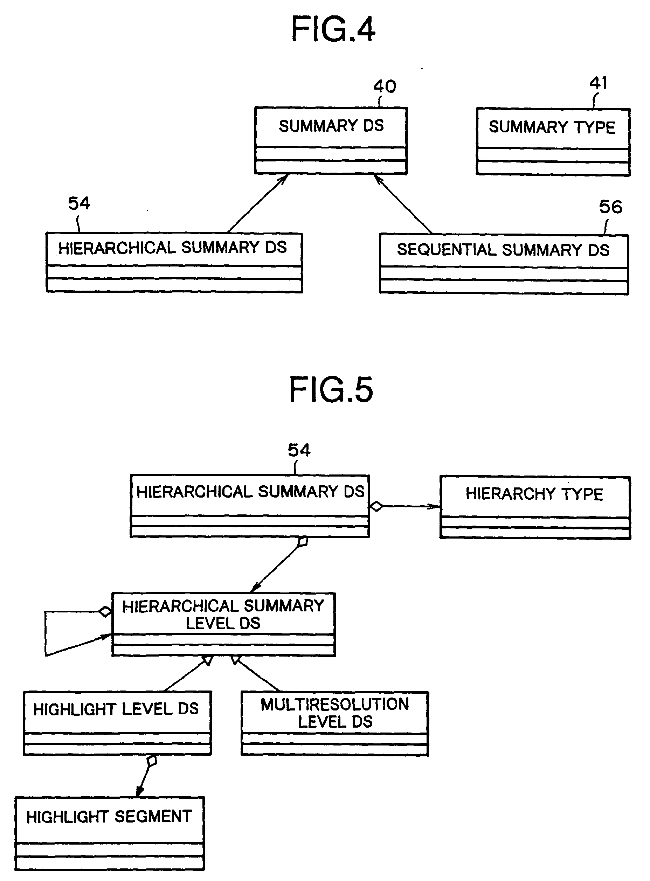

The summary description scheme of Figure 3 is shown in more detail in Figure 4. The content of Fig. 4 is shown in more detail in Fig. 5. To satisfy the various kinds of requirements from users, content providers and service providers, the present invention provides description schemes capable of describing a variety of summary descriptions as shown later. By using the description schemes, the provider side and the user side may have a common framework. Hence, the user can select a desired summary description by utilizing the summaries provided by the provider. Exemplified alternatives selectable by the user can be structured by hierarchically arranging a variety of descriptions such as "want to see a 10-second highlight scene", "want to see only a slam dunk shot" and the like. Furthermore, the provider can provides the user with a plurality of summary descriptions to meet the user preferences using the user usage history information received from the user. These summary descriptions are structured to contain references to the audiovisual media and its segments, frames, and audio tracks that can be efficiently utilized by a presentation engine in rendering different summaries and views of the program. The example of Fig. 4 illustrates in detail a summary description scheme used for representing a variety of summaries as above described. The attribute 'summary type' 41 defines the type of summary description scheme 40. The use of this attribute enables the user to select either a hierarchical summary description scheme 54 or a sequential summary description scheme 56. The attributes of highlight or multiresolution are both constructed with a hierarchical description scheme, shown in more detail in Figure 5. The hierarchical summary description scheme 54 will be described later.

Figure 5 is a block diagram illustrating the hierarchical summary description schemes selectable for preparing summary descriptions. The scheme is as follows: The hierarchical summary description 54 is used to specify and group summaries of an audiovisual program, which may be structured hierarchically. It contains description data of a technique for constructing a hierarchy of an attribute 'summary type'. The hierarchical summary description 54 has plural hierarchical summary level descriptions. The hierarchical summary level descriptions are labeled and organized at different levels as shown below. Each level describes a summary of the audiovisual program by information at a specific level. The hierarchical summary level description is structured in such a way that it may have a further hierarchical summary level description to define a further deep level summary. In general, levels closer to the root of the hierarchy provide coarse summaries and levels further away from the root provide more detailed summaries.

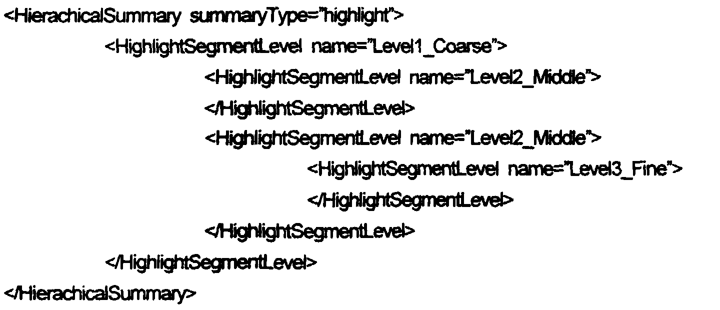

The hierarchical summary description thus structured enables the detailed summary description to include the coarse summary description, eliminating the duplication of the same data for representing the summaries. To view an audiovisual program using the summary description, the user can operate the presentation engine using a desired summary level description and a higher-level summary description.
As shown in Fig. 5, the hierarchical summary level description contains references to audiovisual media and its segments, frames and audio tracks. The reference may be made to segments and frames inside and outside the system. Hence, the system by itself can obtain audiovisual media data from external data stored at external providers and/or inside the system in accordance with the selected summary and can provide the user with multiple views by using the presentation engine. When preparing a summary of a trailer for a serial film program, the description may contain a location of storing the proceeding audiovisual program and its highlight scene and time duration in addition to the preceding audiovisual program and its highlight scene and time duration. This offers the advantage of saving data storing areas at both the provider side and the user.
The above hierarchical summary description has an attribute 'Hierarchy Type', which specifies the type of interrelation between different levels of the summary. The attribute value can specify whether the hierarchy type is dependent or independent. If the hierarchy type is "independent", the information in a hierarchical summary level can completely specify a particular summary, without reference to the information in its parent element. However, it has such a demerit that an amount of necessary data is increased. If hierarchy type is "dependent", the summary at a particular level cannot be prepared without knowledge of its parent element. In this case, a demerit of necessarily organizing data into a hierarchical system is caused but a merit of reducing the data amount is obtained. The user who desires a summary may select either of the types in accordance with the system specification. There is a description scheme for integrating all the summaries having the above-described features.

Audiovisual summaries enable users to consume alternative views of a particular audiovisual program where views can be chosen according to the amount of time available to the user, personal preferences and point of views, and amount of resources available to user's platform. These are achieved by summary descriptions using the above-described summary description schemes.

In a hierarchical summary context where summaries can be at different hierarchy levels, grouping enables summaries to be at the same hierarchy level and made available to the user as alternatives at that same level. For example, a multiview highlight summary may have a 30-second and a 60-second level for time constrained viewing at different detail/length levels. On the other hand, a multiview event summary enables summaries based on different events and different points of view where these summaries do not necessarily have a hierarchical relationship among them and thus they are merely alternatives.

The names of the alternative summaries can be presented to the user in an interactive menu and the user selects the desired summary by using summary description data.

| **ALTERNATIVE SUMMARIES** |
|---|
| THREE POINT SHOTS |
| SLAM DUNK |
| ... |
| .... |
| MY FAVORITE MOMENTS |

An example description according to the above-described summary description schemes that will support the items in this menu is given below. Note that the above menu items correspond to the "Highlight Level Name" descriptors in the description. Indeed, the description may utilize a numerical, machine-readable code corresponding to the string that is presented to the user by the presentation engine. This is an implementation issue.

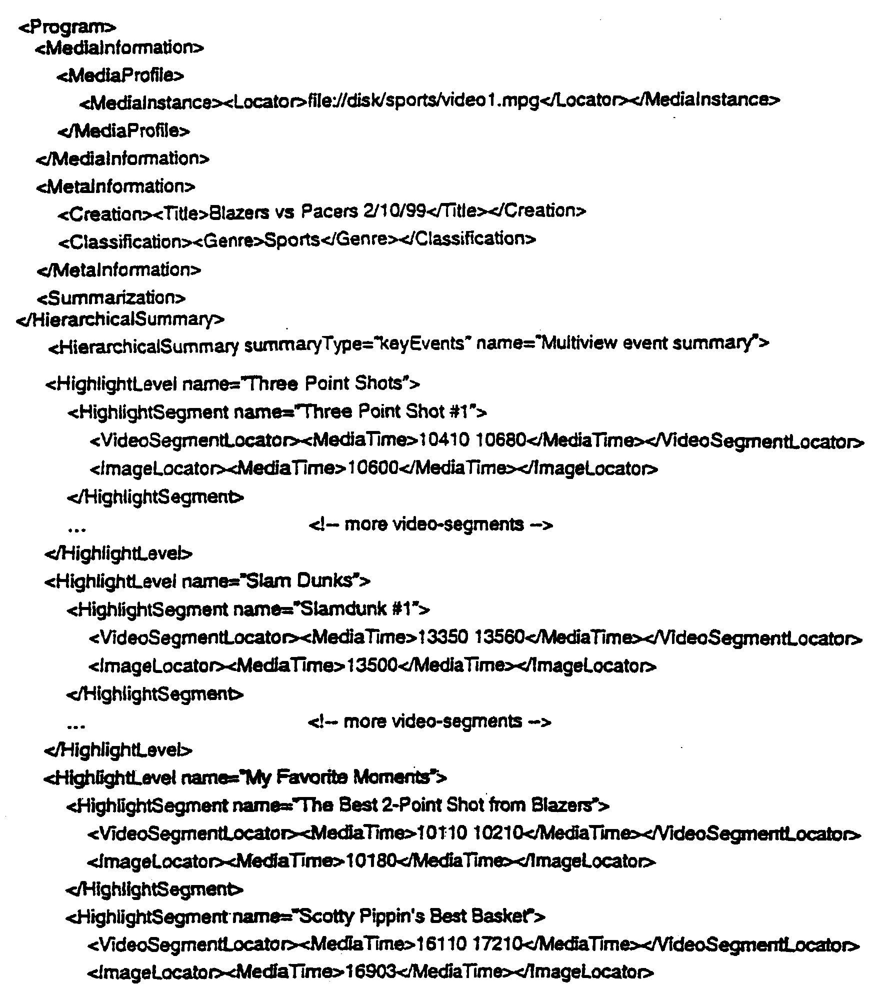

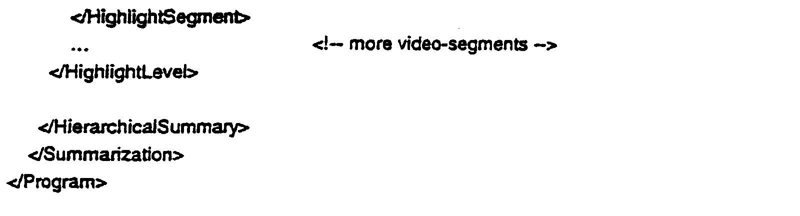

Note that the menu above can facilitate bookmarking of a multitude of segments grouped under one theme, which in this case is an event-based theme. The grouping (or bookmarking) is at a "highlight level" and is at the same hierarchical level. The last item in the menu ("My Favorite Moments") corresponds to a fragment of the description that might have been generated by the user utilizing an appropriate authoring tool in his/her system. In other words, the user may have necessary tools to augment a summary that is available from a service provider, or tools to create a summary description from scratch.

Segment-level bookmarking is also possible as seen in the last part (shaded) of the description shown above. The user in the above example has marked two segments as "The Best 2-Point Shot from Blazers" and "Scotty Pippin's Best Basker". These two bookmarks can be presented to the user in the form of either a separate menu of bookmarks, or a sub-menu of the menu item "My Favorite Moments".

Alternative summaries that are not necessarily hierarchically structured are also allowed, e.g., a summary containing clips of "goals" vs. a summary contain clips of "passing shots". Such grouping of summaries is necessary to allow different event views.

A hierarchical summary refines a summary and is the root element of the hierarchical summary. A hierarchical summary may contain multiple hierarchical summary level elements as shown below. Each hierarchical summary level element specifies a (hierarchical) summary and groups a number of video segments. These summaries represent alternative views of the video program.

A hierarchical summary description has an attribute hierarchyType, which specifies the type of interrelation between different levels of the summary. The hierarchyType can be independent or dependent. If hierarchyType is independent, the information in a hierarchical summary level completely specifies a particular summary, without reference to the information in its parent element. If hierarchyType is dependent, information in a hierarchical summary level adds to, or refines, the information in its parent element; i.e., the summary at a particular level can't be reconstructed without knowledge of the parent element.

The following is an example of a hierarchical summary according to the above-described summary description schemes that contains a highlight summary. The definition of highlight level is given below. The highlight summary may, for example, contain interesting video clips, ordered in multi-level fashion. Since the hierarchyType of this Hierarchical summary is dependent, a highlight summary at level *n*+1 adds more video clips to the highlight summary at level *n*. Thus, each level accumulates more information to provide a longer and more extensive video summary.
〈Hierarchical summary name="mySummary" hierarchyType="dependent"〉
   〈HighlightLevel〉...〈/HighlightLevel〉
〈/Hierarchical summary〉

The hierarchical summary level description scheme is used to specify a summary at a particular level of detail The hierarchical summary level description scheme is an abstract scheme from which two types of summary description schemes are derived, either a highlight level description scheme, or a multiresolution description scheme. Multiresolution description schemes are outside the scope of this disclosure and is only included for completeness. The hierarchical summary level may contain zero or more hierarchical summary level elements as its children.

As mentioned above the highlight level description scheme is used to specify a summary by referring to a sequence of audio-visual segments and their key-frames. A highlight level refines a hierarchical summary level and contains a single summary or part of a summary. A highlight level contains a sequence of references to video segments and their representative key-frames. A locator specifies each video segment and another locator specifies each representative key-frame. A highlight level has a required attribute flame, and an attribute level, which specifies the level of this summary in the hierarchy. It also has an attribute duration, which specifies the total duration of the summary at the same level in the hierarchy.

The following is an example of a simple highlight summary according to the above-described summary description schemes with a duration of 10 seconds. It consists of two video clips, the first from frame 0 to 120 and the second from frame 200 to 380. The key-frame for the first video clip is frame 60 and the key-frame for the second clip is frame 320. Note that a key-frame may be a frame that is visualized before the video segment itself is played; e.g., playback of the video segment is activated by the user clicking on the key-frame.

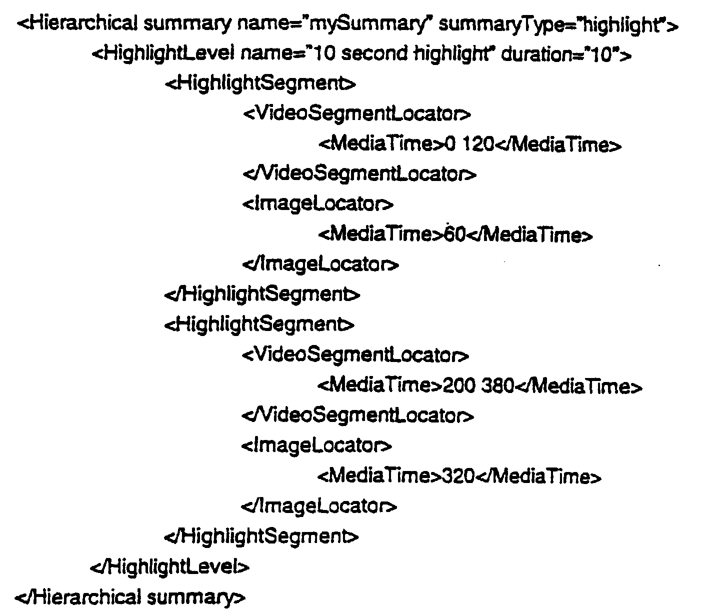

The following is an example of a set of two summaries according to the above-described summary description schemes, one being an alternative summary to the other. The first highlight summary is 4 seconds long and contains only a single video clip, while the second summary is 10 seconds long and contains three video clips. Note that both summaries share one video clip; there is a hierarchical structure evident in the underlying data, yet its representation is not hierarchical.

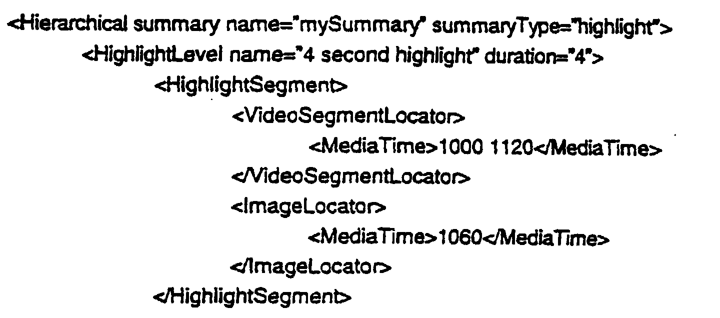

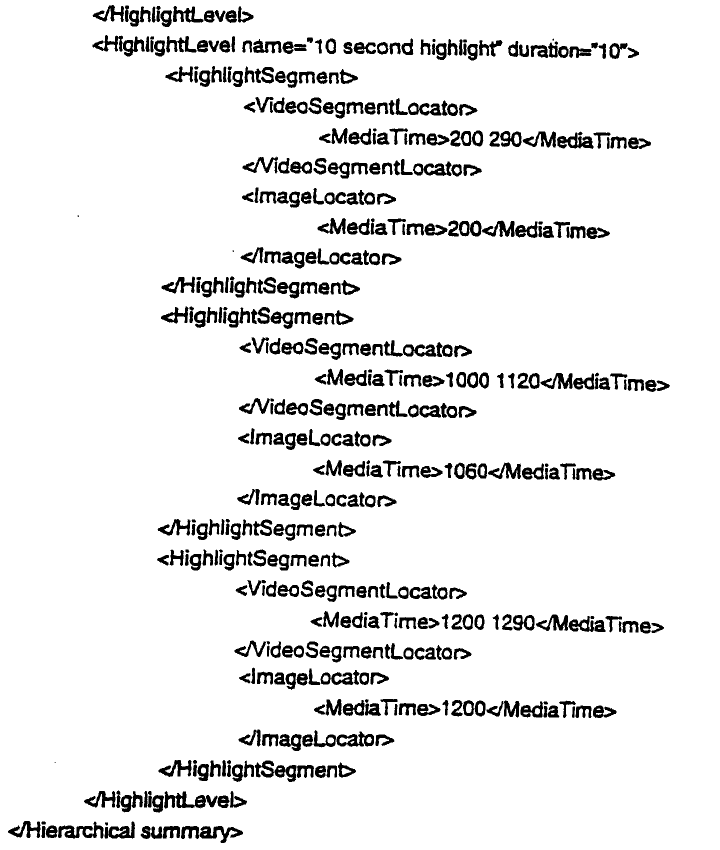

The following is an example of the same set of two summaries according to the above-described summary description schemes, one being an alternative summary to the other. However, they are now hierarchically represented in the description, such that the application is informed of the underlying hierarchy in the data. In this example, the hierarchy type is "independent", which means that the common video clip must be repeated on the finer level, because the information on the finer level must be interpreted independently.

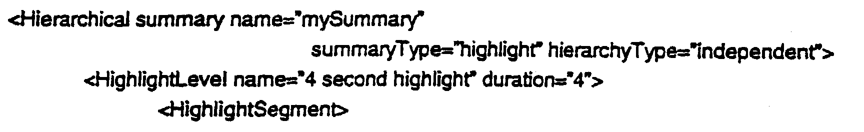

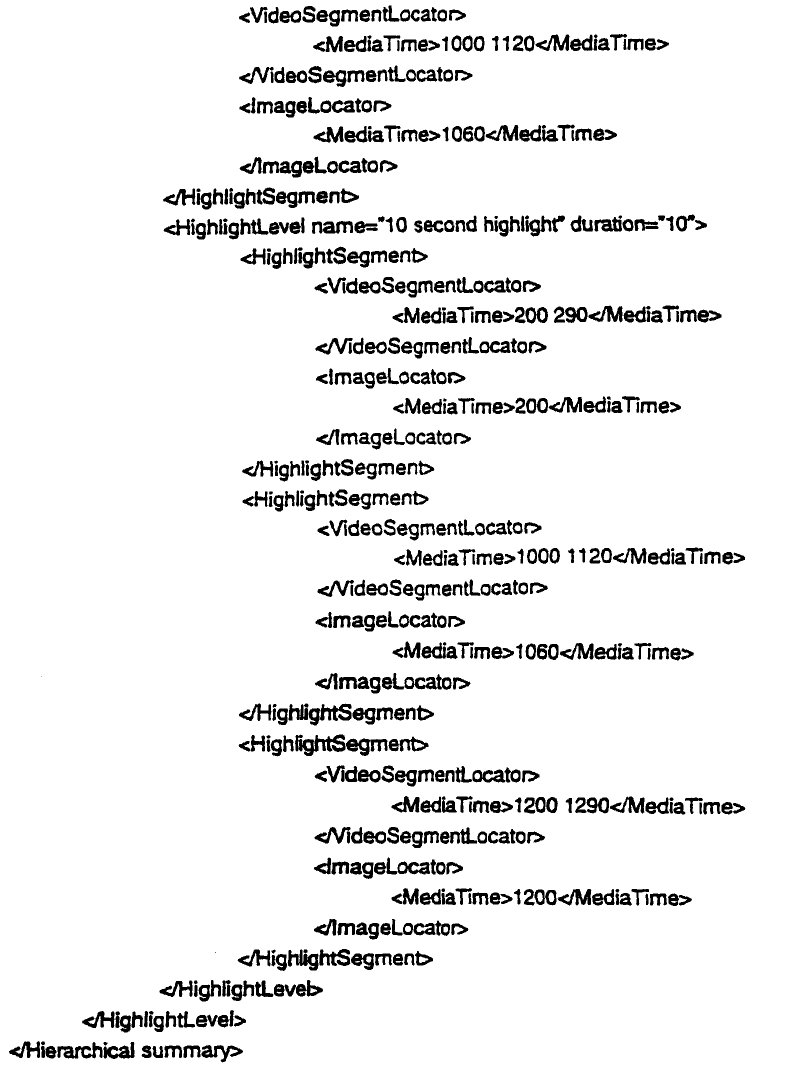

The following is a more complex example of a hierarchical summary according to the above-described summary description schemes consisting of the same video clips, organized into two levels. At the highest level, the summary has a duration of 4 seconds and consists of only one video clip. At the second level, the summary has a duration of 10 seconds and consists of three video clips. Note that both summaries again share one video clip as in the previous example, but it is specified only once, by utilizing a dependent hierarchical representation (hierarchy Type is dependent).

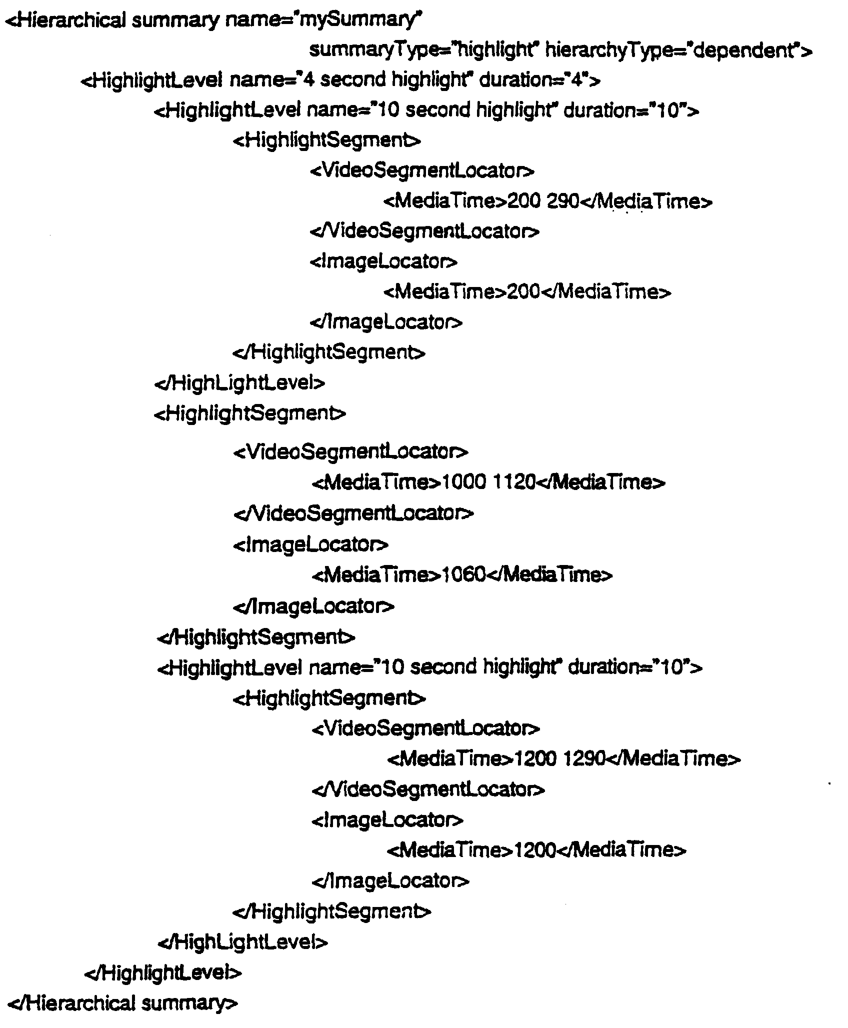

The following is an example of a different set of two summaries, one being an alternative summary to the other, ordered in a two-level hierarchy. In this case, the video clips on the finer level are sub-clips of the single clip on the coarse level. By utilizing the hierarchical representation, the application is informed there is some type of hierarchical relation between the two summaries. However, the hierarchy type is "independent", since the clips on the finer level do not literally include the clip on the coarse level (the information at the coarse level cannot be reused).

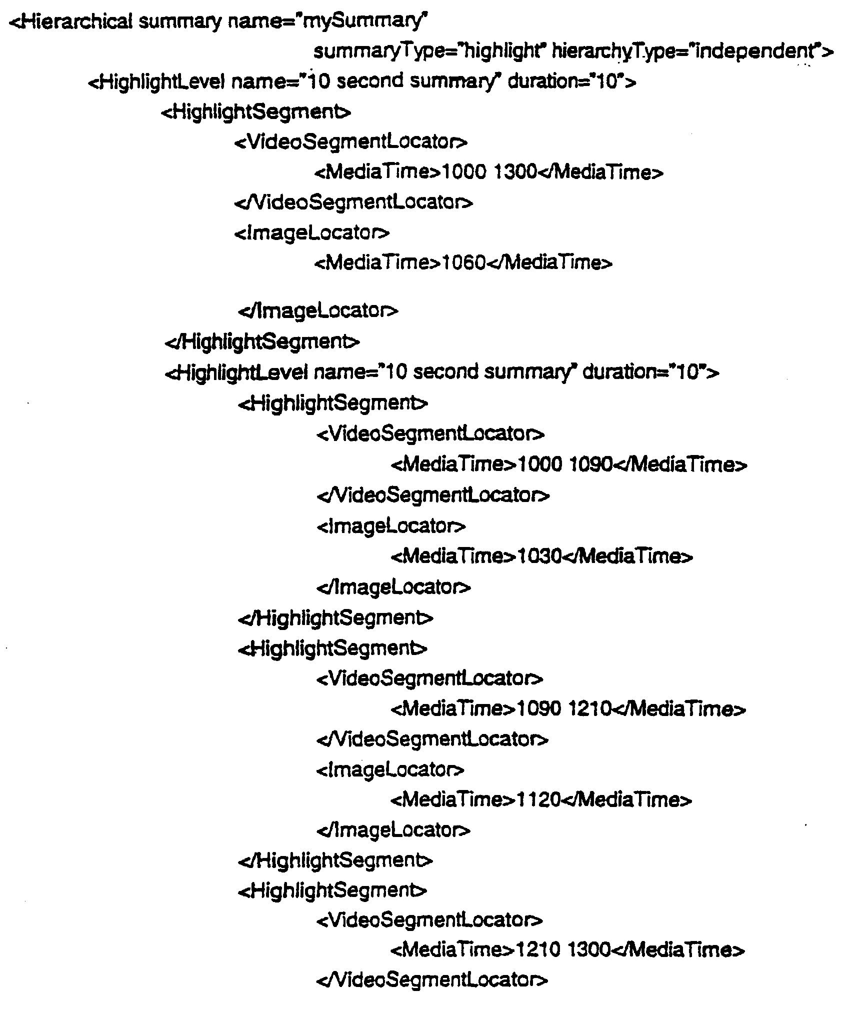

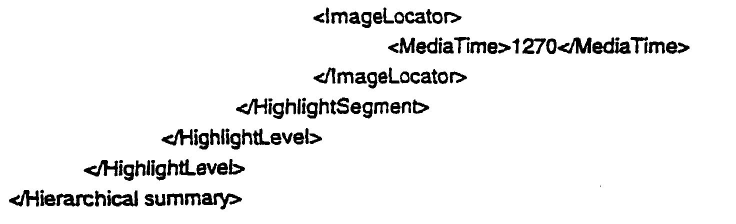

The following is an example of a set of two highlights according to the above-described summary description schemes referring to particular events in a program, in particular "slam dunks" and "three-point shots" in a basketball game video. The first summary contains two video clips, each showing a slam-dunk; the second summary contains two video clips, each showing a three-point shot. By grouping the clips into summaries of events, a user may choose to view only the clips of slam-dunks; alternatively, the user may view all three-point shots. Note that in this case, there is no notion of hierarchy in the underlying real-world events.

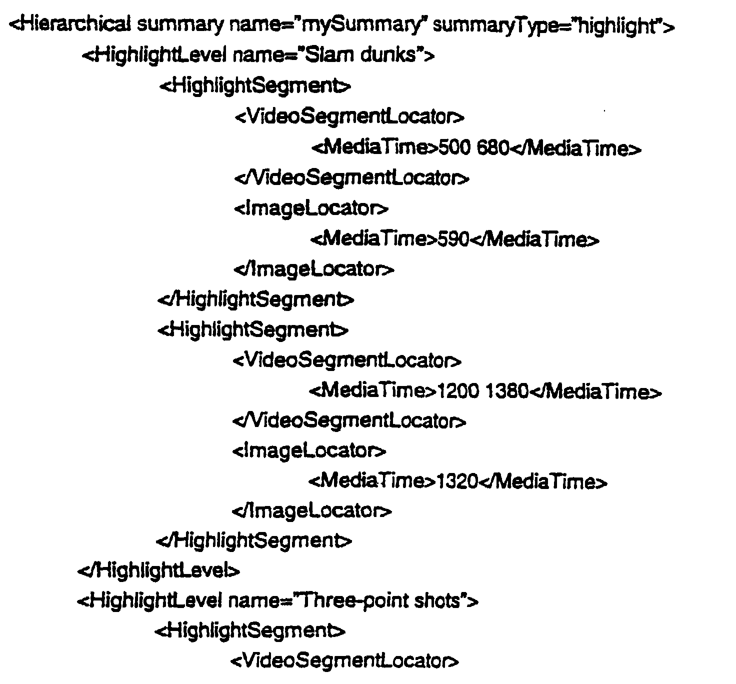

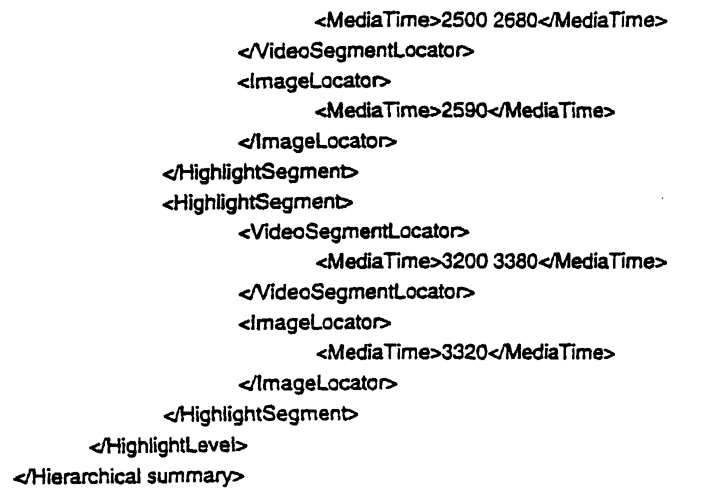

Having seen several examples of the hierarchical summary description scheme and its related components, it is helpful to look at the sequential summary description scheme 56 shown in Figure 4. The sequential summary description scheme is used to specify summaries of an audio-visual item consisting of an arbitrary but predetermined sequence of still images or video frames, which can be visualized sequentially in time. The playback speed of video frames can be controlled to enable smart fast-forwarding.

A sequential summary refines a summary and contains a single audio-visual summary. It contains either a sequence of references to still images, or a sequence of video frames. A sequential summary may contain a sequence of references to audio-clips. Audio-clips may be played back in synchronization with the video frames.

The following is an example of a simple sequential summary according to the above-described summary description schemes, representing an animated slide-show. It refers to a number of images, which may be shown in sequential fashion, or under control of the user.
〈SequentialSummary name="mySummary" summaryType="sequential"〉
   〈ImageLocator〉〈MediaUrl〉file://images/photo1.jpg〈/MediaUrl〉〈/ImageLocator〉
   〈ImageLocator〉〈MediaUrl〉file://images/photo2.jpg〈/MediaUrl〉〈/ImageLocator〉
   〈ImageLocator〉〈MediaUrl〉file://images/photo3.jpg〈/MediaUrl〉〈/ImageLocator〉
   〈ImageLocator〉〈MediaUrl〉file://images/photo4.jpg〈/MediaUrl〉〈/ImageLocator〉
   〈ImageLocator〉〈MediaUrl〉file://images/photo5.jpg〈/MediaUrl〉〈/ImageLocator〉
   〈ImageLocator〉〈MediaUrl〉file://images/photo6.jpg〈/MediaUrl〉〈/ImageLocator〉
〈/SequentialSummary〉

All of these summaries can be presented as alternatives to the user. The user selects the type of summary desired, based upon the type of media representation desired and the level of specificity. As discussed in detail above, the representation can be one of several different types, with multiple levels and can be either dependent or independent.

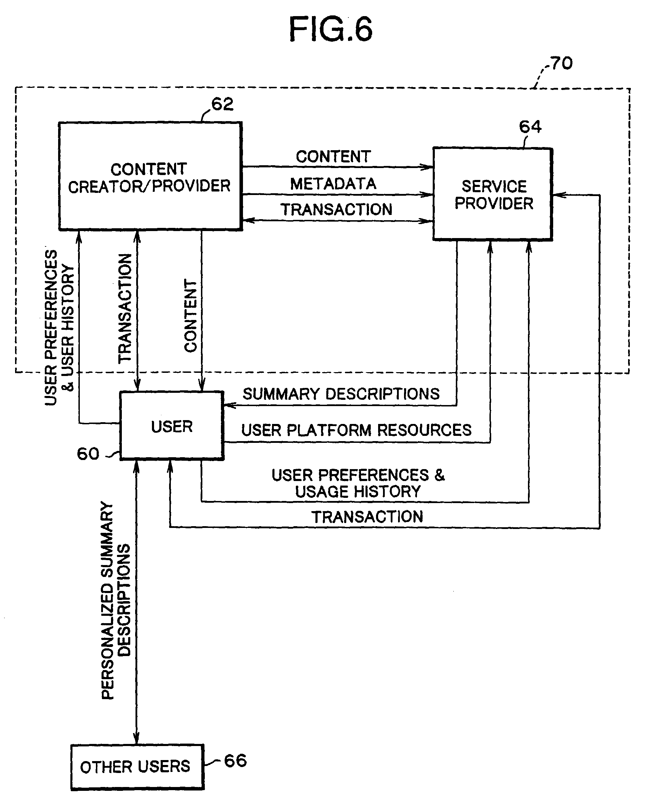

The presentation of these summaries as well as the transfer and communications between the various entities involved in this presentation is shown in Figure 6. These are achieved by using common description schemes such as the above-mentioned title descriptions and summary descriptions. The content creator/provider 62 provides the audiovisual programs and other data services (metadata) associated with those programs to the service provider 64. The data services may include such things as directories of key clips, or other types of indexes of the audiovisual program, for example, such as indexes to segments containing touchdowns and field goals in a football game. The service provider 64 may originally prepare summary description and text information in respect to an audiovisual program possessed by the content provider 62. The service provider 64 and the content provider 62 negotiate some type of fee arrangement for this transfer. The content provider 62 may also be the service provider 64. The user can select an audiovisual program based on the metadata such as title and summary descriptions provided by the service provider 64. The metadata given to the audiovisual program has the same structure as data used for the title and summary descriptions. Hence, an audiovisual program may have metadata provided from plural service providers. The user at the system side can adaptively obtain a desired content by his/her preference for the summary and as the result of comparison of means, expenses and time duration necessary for obtaining the program by utilizing a variety of summaries for the same audiovisual programs.

The service provider 64 then sends the summary description using the above-described summary description scheme about the various audiovisual programs to the user 60. The service provider also tracks the resources at the user's end and the user preference and history. Tracking such information is desirable for the service provider to offer the user descriptions for summaries that are desirable to the user and usable by user's platform. The user can then receive summary descriptions according to the users preference that operate on the content provided by the content provider. There is again some fee arrangement between the service provider and the user.

The content provider may also track the user preferences and usage history to directly deliver the summarized programs to the user 60. In this case, the summary descriptions reside at the content provider, and the content provider selects, according to user data, generates and directly delivers the appropriate program summary to the user.

In this particular example, the user transacts separately with the content provider and the service provider for content and summary services, respectively. However, all the functionality provided within box 70 could be provided by either the service provider or the content provider. Some content providers may decide to offer these services, as well as some service providers deciding to offer content. It is also possible that the user has arrangements with other providers. For one service or type of content the two providers could be separated, for other services or types of content, the two could be combined together. In this case, where the service and content providers are the same, the user preferences and usage history would be sent only once.

The user may also interact with other users to exchange information by using the above-described description scheme. For example, the user may have the capability to produce customized audiovisual program summaries (e.g., "My Favorite Moments") at the user end. The user could then pass these customized summary descriptions to other users 66 to share experiences or to make reviews and recommendations about a particular program. Other users could then receive summary descriptions that operate on these programs provided by a content provider. Alternatively, one user transfers only a description data of a customized summary for an audiovisual program to the other user that can then directly refer to and view the audiovisual program specified by the customized summary.

In this manner, the descriptive framework is used to provide summary descriptions. These summary descriptions can then be used to present alternative summaries of audiovisual content to the user. The content and the summary descriptions are provided according to an arrangement of transfers and transactions.

Thus, although there has been described to this point a particular embodiment for a method and structure for as description framework for audiovisual presentation systems, it is not intended that such specific references be considered as limitations upon the scope of this invention except in-so-far as set forth in the following claims.

## Claims

1. A system operable to provide a description framework about programs presented by an audiovisual system, the framework including a descriptive structure operable to identify and locate each of the audiovisual representations of audiovisual material.

2. The system of claim 1, wherein the description framework includes at least one multimedia title description.

3. The system of claim 2, wherein the title description included in the description framework collectively describes text data of a title of an audiovisual content and multimedia data representing a content of at least one audiovisual program.

4. The system of claim 2, wherein the title description included in the description framework includes information for locating multimedia data and is capable of handling multimedia data being outside the audiovisual system.

5. The system of claim 1, wherein the description framework includes at least one summary description.

6. The system of claim 5, wherein the summary description included in the description framework comprises a combination of at least one piece of partial data obtainable by extracting a part of multimedia data composing the audiovisual content and is described using information for locating the multimedia data and the partial data extracted therefrom.

7. The system of claim 5, wherein the summary description included in the description framework includes multimedia data and information for locating to extract a partial multimedia data from the multimedia data and capable of handling multimedia data being outside the audiovisual system.

8. The system of claim 1, wherein the description framework includes one of either a multimedia title description or a summary description and at least one other component.

9. A method of presenting summaries of audiovisual content to a user, the method comprising the steps of:
a) presenting a multi-view menu of the available types of summaries to the user, wherein the multi-view can provide hierarchical and non-hierarchical summaries;
b) receiving a user selection of a summary type; and
c) providing summaries of the selected type to the user.

10. A method of providing summary description services of audiovisual content to a user (60), comprising the steps of:
a) receiving information from a user (60), wherein said information includes specifications of platform resources at the user end and user preferences;
b) tracking usage history of the user (60);
c) transmitting audiovisual material to the user (60); and
d) providing summary descriptions operable to be applied to the audiovisual material to the user (60).

11. The method of claim 10 wherein said receiving and providing steps are performed by a service provider (64).

12. The method of claim 11 wherein said transmitting audiovisual content step is performed by a content provider (62).

13. The method of claim 10 wherein the steps are performed by a combination content and service provider (62, 64).

14. The method of claim 10 wherein the summary descriptions provided to the user (60) are of a format allowing the user (60) to exchange summary descriptions with other users (66).

15. The method of claim 14 wherein the format allowing the user (60) to exchange summary descriptions also allows the user (60) to customize summary descriptions.
